# EUROPEAN PATENT APPLICATION

(11) **EP 1 743 787 A1**
(43) Date of publication of application: **17.01.2007**
(21) Application number: 06115700.4
(22) Date of filing: 20.06.2006
(51) Int. Cl.: B60G 17/08, F16F 9/46

(54) **Hydraulic damper with damping force adjustment device**

(30) Priority: 12.07.2005 IT MI20050253 U
(71) Applicant: PIAGGIO & C. S.p.A., 56025 Pontedera (Pisa) (IT)
(72) Inventor: Aspettati, Paolo, 50132 Firenze (IT)
(74) Representative: Coppo, Alessandro

(57) **Abstract**

A device (10) for adjusting the damping of a shock absorber (1) provided with at least one by-pass (4) for the hydraulic oil, at least one adjustment pin (s) axially slidingly seated into the shock absorber (1) for modifying, according to the adjustment needs, the flow section for the hydraulic fluid of the by-pass (4), at least one adjustment element (3) provided with at least one conical portion (6) and arranged upstream of the pin (2) and at least one elastic means (7) for keeping an end of the pin (2) in contact with the conical portion (6). The adjustment element (3) is free to translate and rotate relative to the axis thereof for determining the axial sliding of the pin (2). The adjustment element (3) is actuated in rotation by at least one electrical motor (5).

## Description

The present invention relates to a device for adjusting the damping of a shock absorber.

As known, the suspension of a motorcycle can be divided into two portions: an elastic one, consisting of the spring, and a damping one, consisting of the shock absorber.

The elastic portion can be adjusted acting on special screw adjusters continuously or snap-wise so as to increase or decrease the static compression.

The damping portion, that is, the shock absorber, can be adjusted both ion the compression and in the extension speed through screw or knob adjusters that controls some needles used to choke the holes through which the hydraulic oil responsible for the damping effect flows.

In detail, in the shock absorbers with mechanisms for adjusting the hydraulic characteristic in compression of the pin type, the adjustment occurs by varying the flow section of a by-pass through which the hydraulic oil flows.

To this end, the end of the conical pin opposite the by-pass contacts an adjustment element that is manually controlled through a special external control.

The adjustment in pin shock absorbers of the traditional type is therefore performed manually.

In the light of the above, there is a clear need of having a device for adjusting the damping of a shock absorber of the automatic type, like the one according to the present invention, which should not require a manual operation by the motorcycle's driver but the simple actuation of an automatic control.

Therefore, the purpose of the present invention is to solve the problems of the prior art by providing a device for adjusting the damping of a shock absorber which should not require a manual operation by the motorcycle's driver.

A further object of the present invention is to obtain a device for adjusting the damping of a shock absorber provided with extreme structural and functional simplicity.

These and other purposes are achieved by the device for adjusting the damping of a shock absorber according to the present invention which exhibits the features of the annexed claim 1.

Further features and advantages of the present invention will appear more clearly from the following description, made by way of an illustrative nonlimiting example with reference to the annexed drawings, wherein:
- figure 1 shows a schematic partial section side view of a first embodiment of the device for adjusting the damping of a shock absorber according to the present invention;
- figure 2 shows a schematic partial section side of the device for adjusting the damping of a shock absorber at the end of the stem connected to the motor; and
- figure 3 shows a schematic partial section elevation view of a shock absorber on which there is installed the device for adjusting the damping according to the present invention.

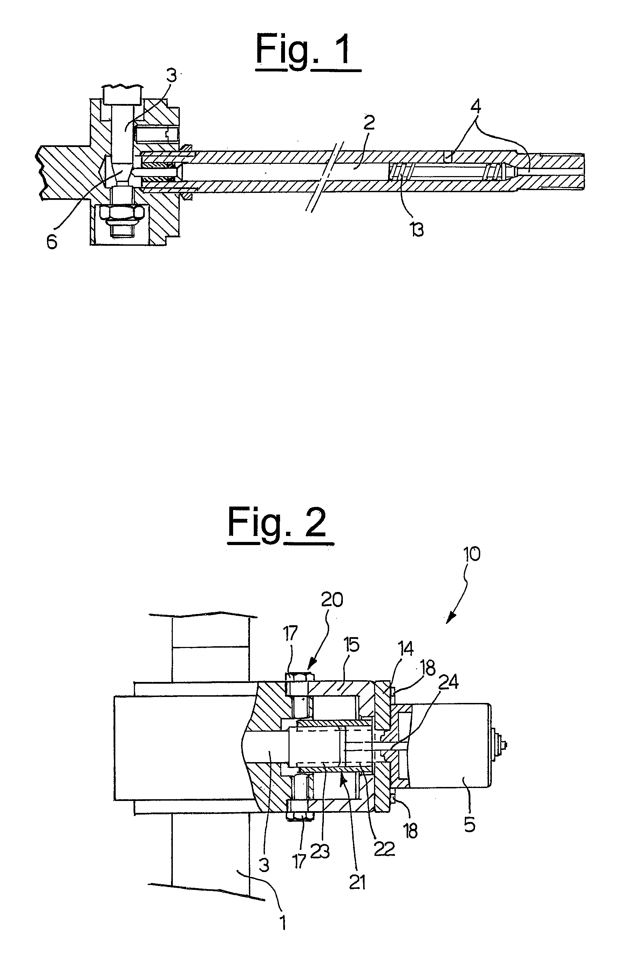

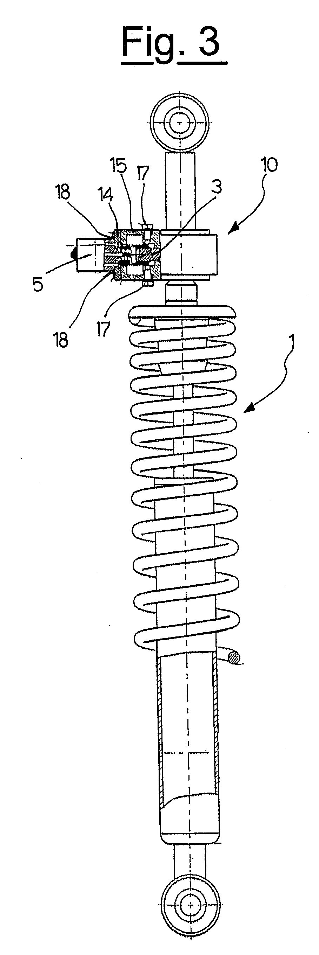

With reference to figures 1-3, there is shown a device for adjusting the damping of a shock absorber 1, globally indicated with reference numeral 10.

Device 10 comprises at least one by-pass 4 for the hydraulic oil and at least one adjustment pin 2, axially slidingly seated into the shock absorber 1 for modifying the flow section for the hydraulic fluid of by-pass 4 according to the adjustment requirements of shock absorber 1.

By-pass 4 is arranged at an end of shock absorber 1, relative to pin 2, whereas at the opposite end there is an adjustment element 3, contained within shock absorber 1, and provided with at least one conical portion 6.

The conical portion 6 therefore contacts an end of pin 2.

To this end, that is, in order to keep the end of pin 2 in contact against the conical portion 6, there is provided an elastic means 13, such as a helical contrast spring. The helical spring is arranged at the end of pin 2 intended for varying the flow section of by-pass 4.

The adjustment element 3 is arranged orthogonally relative to pin 2 and is capable of rotating and translating in such direction relative to the axis thereof for determining the axial sliding of the pin.

The rotation and translation of the adjustment element 3 in one direction determines the rotation and lowering of the conical portion 6. The latter therefore makes pin 2 slide axially which, overcoming the resistance of the elastic means 13, closes the flow section of by-pass 4 at least partly.

On the other hand, the rotation and translation of the adjustment element 3 in the opposite direction determines the rotation and lifting of the conical portion 6. In this case, under the action of the elastic means 13, pin 2 slides axially in a direction opposite to the previous one, for opening the flow section of by-pass 4 at least partly.

Advantageously, according to the present invention, the adjustment element 3 is actuated in rotation by at least one electrical motor 5.

The electrical motor 5 preferably is a stepping motor.

As better shown in figure 2, the electrical motor 5 is made integral to the shock absorber stem through a motor support 15 and an adapter 14.

The motor support 15, again as shown in figure 2, is connected to the stem of shock absorber 1 through traditional fixing means 20, such as screws and bolts 17.

Motor 5 is further provided, on the front surface thereof, with threaded holes (not shown) for allowing fixing to the motor support 15 through screws and bolts 18.

The motor shaft 24 is operatively connected to the adjustment element 3 through suitable motion transmission means 21.

The motion transmission to the adjustment element 3 must occur leaving the adjustment element 3 free to translate along the axis thereof.

To this end, the transmission elements 21 are represented according to a first embodiment of the present invention by two paracentric profiles 22, 23 of which the first 22 functionally connected to motor shaft 24 and the second 23 functionally connected to the adjustment element 3. The first 22 of the two paracentric profiles, that is, the one functionally connected to motor shaft 24, exhibits an outer toothing adapted for engaging with an inner toothing provided on the second one 23 of the two profiles, that is, the one functionally connected to the adjustment element 3, for transmitting the motion.

As an alternative, as motion transmission means it is possible to provide a bayonet connection of which a portion arranged on the end of shaft 24 protruding from motor 5 and the other on the end of the adjustment element 3.

According to an advantageous aspect of the present invention, motor 5 is connected, in a known manner, to an electronic control board, not directly shown, adapted for controlling the motor itself.

Finally, it is clear that several changes and variations can be made to the device thus conceived, all falling within the invention; moreover, all details can be replaced with technically equivalent elements. In the practice, the materials used as well as the sizes, can be whatever, according to the technical requirements.

## Claims

1. A device (10) for adjusting the damping of a shock absorber (1) comprising at least one by-pass (4) for the hydraulic oil, at least one adjustment pin (2) seated, in axially sliding manner, into said shock absorber (1) for modifying the flow section for the hydraulic fluid of said by-pass (4) according to the adjustment need, at least one adjustment element (3) provided with at least one conical portion (6) and arranged upstream of said pin (2), and at least one elastic means (7) for keeping an end of said pin (2) in contact with said at least one conical portion (6); said at least one adjustment element (3) being free to translate and rotate relative to the axis thereof for determining the axial sliding of said pin (2), **characterised in that** said at least one adjustment element (3) is actuated in rotation by at least one electrical motor (5).

2. An adjustment device (10) according to claim 1, **characterised in that** said electrical motor (5) is an electrical stepping motor.

3. An adjustment device (10) according to claim 1, **characterised in that** said at least one electrical motor (5) is made integral to the stem of said shock absorber (1) through a motor support (15) and an adapter (14).

4. An adjustment device (10) according to claim 3, **characterised in that** said motor support (15) is associated to said shock absorber (1) through fixing means (20).

5. A device (10) for adjusting the damping of a shock absorber according to claim 1, **characterised in that** it comprises motion transmission means (21) between said motor (5) and said adjustment element (3).

6. An adjustment device (10) according to claim 5, **characterised in that** motion transmission means (21) comprise two paracentric profiles of which the first one (22) functionally connected to said motor (5) and the second one (23) to the adjustment element (3).

7. An adjustment device (10) according to claim 5, **characterised in that** motion transmission means (21) comprise a bayonet connection.

8. A device (10) for adjusting the damping according to claim 5, **characterised in that** it comprises at least one electronic control board for controlling said motor (5).

9. A device (10) for adjusting the damping of a shock absorber according to claim 1, **characterised in that** elastic means comprise a helical spring.
